Europäisches Patentamt

European Patent Office

Office européen des brevets

(19)

(11) Publication number: **0 167 522**
**B1**

(12) **EUROPEAN PATENT SPECIFICATION**

(45) Date of publication of patent specification: **08.03.89**

(51) Int. Cl.⁴: **C 05 F 11/02, C 05 G 1/00**

(21) Application number: **84900413.0**

(22) Date of filing: **29.12.83**

(86) International application number:
**PCT/SE83/00484**

(87) International publication number:
**WO 85/03071 18.07.85 Gazette 85/16**

(54) **A PLANT NUTRIENT PRODUCT.**

(43) Date of publication of application:
**15.01.86 Bulletin 86/03**

(45) Publication of the grant of the patent:
**08.03.89 Bulletin 89/10**

(84) Designated Contracting States:
**DE FR GB**

(56) References cited:
**DE-A-1 592 790**
**SE-A-78 017 894**
**SE-A-82 040 080**
**SE-B- 375 982**
**US-A-4 067 716**

(73) Proprietor: **INNOCAP AKTIEBOLAG**
**Box 81550**
**S-104 82 Stockholm (SE)**

(72) Inventor: **HAEFFNER, Erik**
**Svanholmsvägen 29**
**S-182 75 Stocksund (SE)**
Inventor: **THRAP-OLSEN, Olav**
**Älgvägen 13**
**S-181 43 Lidingö (SE)**

(74) Representative: **Inger, Lars Ulf Bosson**
**L + U INGER Patentbyra HB Garvaregatan 12**
**S-262 00 Ängelholm (SE)**

**The file contains technical information
submitted after the application was filed and
not included in this specification**

EP 0 167 522 B1

Courier Press, Leamington Spa, England.

## Description

In soil utilization the consumption of inorganic plant nutrients, so called commercial fertilizers, has greatly increased in recent years. Such fertilizers contain nitrogen, phosphorous, potassium, and trace substances essential to the plants. Normally, these chemical elements are present in chemical compounds which are readily dissolved in water and which can thus be rapidly leached out from the top soil layer by rain water, and carried therewith into water-ways and lakes, creating serious environmental problems. Consequently, when plant nutrients are administered in the form of commercial fertilizers great losses are often experienced.

When commercial fertilizers are used annually over long periods of time, contaminants in the form of heavy metals are liable to accumulate in the ground, in a chemical form such as to be drawn into and be concentrated in the plants. Heavy metals can also be found in excessively high concentrations when untreated digested sewage sludge from sewage plants is used as a fertilizer.

It is also known to use soil improving agents (SE—A—375,982), whereby an enzymatically degraded waste material, household waste, is mixed with a sandy material, and the mixture is pressed into solid product containing 60—65% of water. The solid product in the form of a string is laid out on the soil, whereupon enzymatic degradation takes place. After enzymatic degradation sewage sludge is added together with nutrients, whereupon the mixture is stored for two months before being pressed into cakes containing the ingoing amount of water. The household waste preferably mixed with bark, and sewage sludge.

The present invention is based upon the discovery that it is possible to create a durable physical and chemical environment of such description that a plant nutrient can be supplied to the roots of the plants with a much greater efficiency (yield) than was previously considered possible. By practicing the present invention it is possible to signficantly improve the harvest yield, i.e., to produce larger harvests per unit of ground area and amount of nutrients supplied than has previously been possible with earlier methods.

The essential features of the invention reside in providing the soil not only with nutrients as such, but also, simultaneously, with the chemical, physical, and biological environment required in order to the plants, through their roots, to fully utilize the nutrients in an optimal manner, while any surplus of nutrients remain in the soil from one growing season to the next.

In accordance with the invention, the nutrient substances are incorporated and absorbed in pellets of a compostible, and composted, ground biomaterial, such as the finely-divided bark of conifers, de-watered and shredded peat, disintegrated news-print, compostible and composted fractions of domestic waste, straw and common reed, either with, or without the addition of fresh or digested sludge from communal sewage plants.

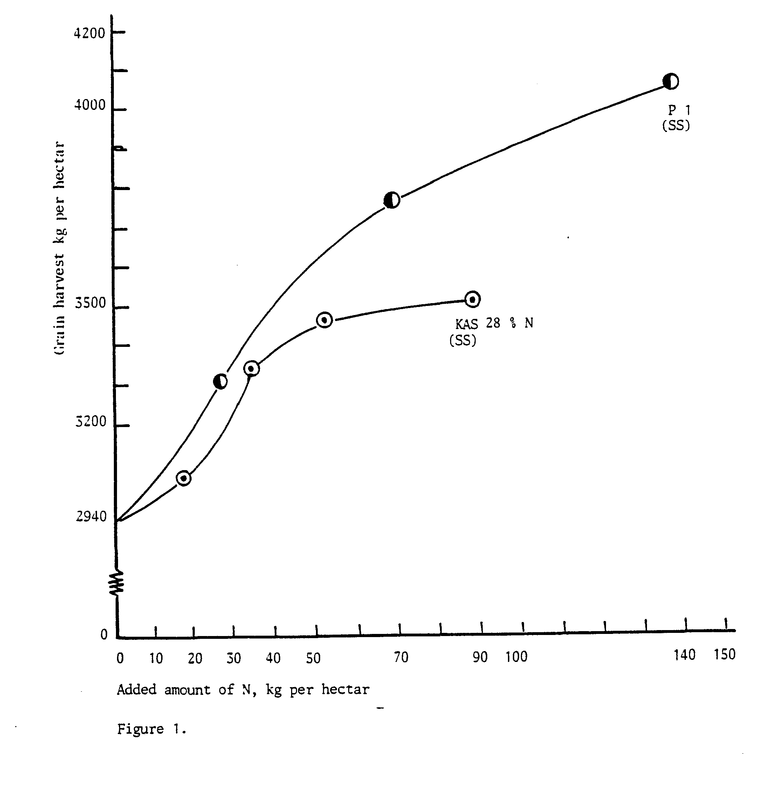

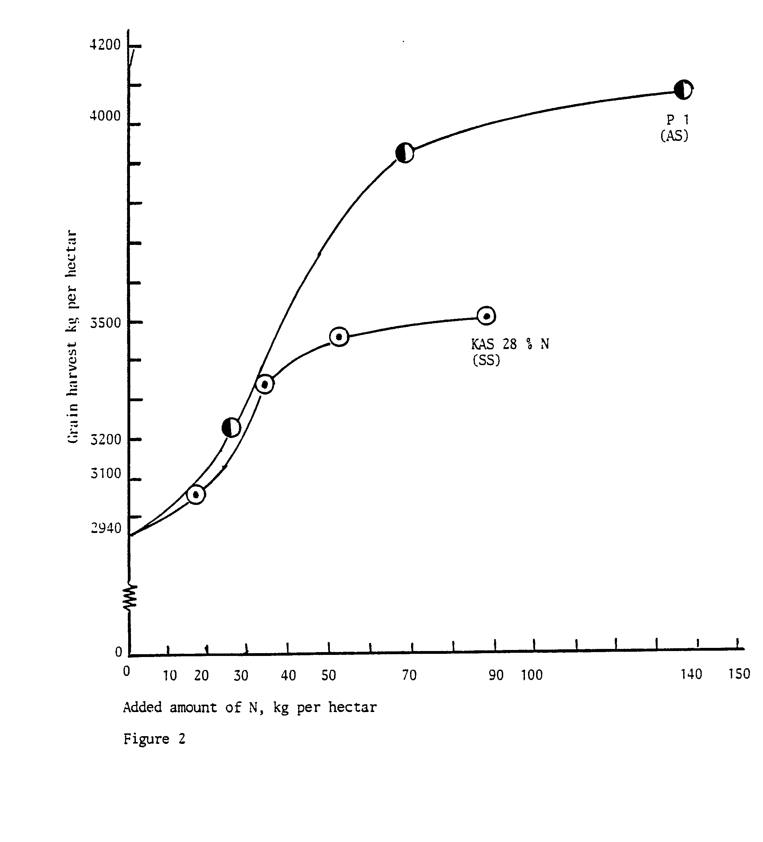

The surprisingly high yield which can be obtained when practicing the invention is illustrated in Figures 1 and 2. Figure 1 illustrates the harvest yield when administering various amounts of nitrogen per hectar, on one hand a commercial fertilizer, KAS, and on the other hand plant nutrient pellets of the invention, P1. It will be seen from Figure 2 that even when the nutrient pellets of the invention is administered in the autumn, about six months before the seed is to be sown, the yield per hectar, and amount of nitrogen supplied is greater than when nitrogen is administered in the spring in the form of a commercial fertilizer, under otherwise similar conditions.

This shows that the present pellets create a depot effect in the soil with regard to distribution of plant nutrients, the addition of microbiological activities, and other factors, which are essential for a good harvest result. At the same time as the nutrient effect greatly increases in accordance with the illustrated graph, any heavy metals present are bound to the bark in the form of insoluble so-called chelate compounds, which prevents the plants from absorbing heavy metals, or reduce the extent to which such metals are absorbed.

### Example

Bark having a dry substance contents of 250 kg was shredded to particle size of at most 5 mm and was mixed thoroughly with de-watered peat having a dry substance contents of 250 kg and containing other disintegrated biomass. The mixing continued until a homogeneous mass having an optimal water content with regard to composting was obtained. This mass was composted in a vertical reactor vessel, while continuously aerating the mass and turning it over. During the composting process the mass is heated to 70°C for such a time that any pathogenic bacteria present are killed off.

Composting involves a biological degradation of the biological mass involved, which leads to a stabilization of the organic material, and the mixture is made hygienic by the heat generated, as mentioned above. This is particularly important in the case a digested sludge from a sewage plant is included. Intended plant nutrients were added to the composted mass in a chemical form such as to prevent the nutrients from leaving during the manufacturing process. In certain cases, the plant nutrients can be added prior to the composting process.

The thus enriched mixture having a moisture content of about 45% was compressed to a relatively high density (about 0.8—1.0) and was formed into pellets in a pellet extruder or pelletizing machine, the pellets being dried and cooled, whereby mechanically very strong pellets were obtained. Pelletizing also facilitates handling, transportation, and spreading of the product.

The ready-to-use pelleted product has a moisture content of 10—15% by weight, which is a reasonable level, at which no microbiological activities occur during storage.

When compressing the mixture during the pelletizing process the nutrients are adsorbed on and bound to the organic material, and are slowly released in the soil in keeping in with the absorbing ability of the plants. Such trace elements as Mg, Mn, B, Co, and Cu can also be added to the homogeneous mass together with the plant nutrients prior to the pelletizing process.

The composted organic content of the pellets increases the biological activity when mixed with the soil, and provides for an extended fertilizing effect (after effect). The biological material present bark, and peat shows, moreover, an ability to bind water, whereby the water-retention provides for an adequate environment for the nutrient uptake.

In a preferred embodiment of the invention bark, peat, and sewage sludge are mixed in the relation 25:25:50 with regard to dry substance content, and is provided with plant nutrients in a suitable form. The mixture is then pelletized, and introduced into a reactor to be composted by means of a continuous aeration. After completed composting, spreading on the soil is carried out in known ways.

Simultaneously with pelletizing seeds can be added to the mass which is to be pelletized, whereby a product is obtained which provides, initially, the best conditions for germination and nutrient emission during the first time period in the soil. By means of the water retention ability of the biomass optimal conditions for the seed is obtained, and the risk for a destroyed sowing by drying is eliminated.

## Claims

1. A method for improving soil, characterized by supplying to the soil pellets comprising a mixture of bark and peat, preferably provided with plant nutrients (N, P, K) and trace elements, which mixture has been composted and compressed in an extruder press to form pellets having a water content of 10—15% by weight.

2. A method according to claim 1, characterized in that the plant nutrients are added after the composting process.

3. A method according to claim 1, characterized in that an organic sewage sludge is added to the mixture prior to said composting process.

4. A method according to claim 1, characterized in that bark, peat, and sewage sludge are mixed and formed into pellets in an extruder press, whereupon the pellets are composted, optional plant nutrients being added prior to composting.

5. A method according to claims 1 to 4, characterized in that seeds for sowing are added to the mass prior to pelletizing in an extruder press.

6. A method according to claim 4, characterized in that bark, peat, and sewage sludge are mixed in the weight ratios 25:25:50 with regard to dry substance content.

## Patentansprüche

1. Verfahren zur Bodenverbesserung, gekennzeichnet durch Zuführen von Pellets zu dem Boden, welche eine Mischung von Rinde und Torf aufweisen, vorzugsweise versehen mit Pflanzennährstoffen (N, P, K) und Spurenelementen, wobei die Mischung kompostiert worden ist und in einer Extruderpresse zusammengepreßt worden ist, so daß Pellets gebildet werden, welche einen Wassergehalt von 10—15 Gewichts-% haben.

2. Verfahren nach Anspruch 1, dadurch gekennzeichnet, daß die Pflanzennährstoffe nach dem Kompostierungsprozeß zugefügt werden.

3. Verfahren nach Anspruch 1, dadurch gekennzeichnet, daß vor dem Kompostierungsprozeß der Mischung ein organischer Klärschlamm hinzugefügt wird.

4. Verfahren nach Anspruch 1, dadurch gekennzeichnet, daß Rinde, Torf und Klärschlamm gemischt und in einer Extruderpresse zu Pellets geformt werden, worauf die Pellets kompostiert werden, wobei wahlweise Pflanzennährstoffe vor der Kompostierung hinzugefügt werden.

5. Verfahren nach einem der Ansprüche 1 bis 4, dadurch gekennzeichnet, daß Saatgut zum Aussähen vor der Pelletisierung in einer Extruderpresse der Masse hinzugefügt wird.

6. Verfahren nach Anspruch 4, dadurch gekennzeichnet, daß Rinde, Torf und Klärschlamm im Gewichtsverhältnis 25:25:50, bezogen auf den Trockensubstanzgehalt, gemischt werden.

## Revendications

1. Procédé pour améliorer ou amender le sol, caractérisé en ce qu'on fournit au sol des pastilles comprenant un mélange d'écorce d'arbre et de tourbe, de préférence additionné de substances nutritives pour les plantes, (N, K, P) et d'oligo-éléments, ce mélange ayant été mis sous forme de compost et comprimé dans une presse à extruder pour former des pastilles ayant une teneur en eau de 10 à 15% en poids.

2. Procédé selon la revendication 1, caractérisé en ce que les substances nutritives pour les plantes sont ajoutées après les opérations de formation de compost.

3. Procédé selon la revendication 1, caractérisé en ce qu'une boue organique d'eau résiduaire est ajoutée au mélange avant lesdites opérations de formation de compost.

4. Procédé selon la revendication 1, caractérisé en ce qu'on mélange l'écorce d'arbre, la tourbe et la boue d'eau résiduaire et l'on met le mélange sous forme de pastilles dans une presse à extruder, puis on met les pastilles en forme de compost, avec, avant la mise sous forme de compost, l'addition facultative de substances nutritives pour les plantes.

5. Procédé selon les revendications 1 à 4, caractérisé en ce qu'on a ajoute à la masse des graines de semence, avant d'effectuer le pastillage dans une presse à extruder.

6. Procédé selon la revendication 4, caractérisé en ce qu'on mélange l'écorce d'arbre, la tourbe et la boue d'eau résiduaire selon des rapports pondéraux de 25:25:50, sur la base de la teneur en substance sèche.

Figure 1.

1

Figure 2